(19) Europäisches Patentamt
European Patent Office
Office européen des brevets

(11) **EP 3 591 929 A1**

(12) **EUROPEAN PATENT APPLICATION**

(43) Date of publication:
**08.01.2020 Bulletin 2020/02**

(51) Int Cl.:
*H04L 29/06* (2006.01)   *H04J 3/06* (2006.01)

(21) Application number: **18182297.4**

(22) Date of filing: **06.07.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(71) Applicant: **Nokia Solutions and Networks Oy**<br>**02610 Espoo (FI)**<br><br>(72) Inventors:<br>• **Kalliola, Aapo**<br>**00710 Helsinki (FI)** | • **Holtmanns, Silke**<br>**01800 Klaukkala (FI)**<br>• **Miche, Yoan Jean Claude**<br>**01800 Klaukkala (FI)**<br><br>(74) Representative: **Nokia EPO representatives**<br>**Nokia Technologies Oy**<br>**Karakaari 7**<br>**02610 Espoo (FI)**<br><br>Remarks:<br>Claims 16 to 25 are deemed to be abandoned due to non-payment of the claims fees (Rule 45(3) EPC). |

(54) **ENSURING OPERATION OF A COMMUNICATION NETWORK IN CASE OF AN ABNORMAL TRAFFIC CONDITION**

(57) According to an example aspect of the present invention, there is provided an apparatus comprising means for determining an abnormal traffic condition, means for buffering a time synchronization packet for a first period of time upon determining the abnormal traffic condition and means for transmitting the time synchronization packet to a second network node upon expiry of the first period of time.

FIGURE 6

**Description**

FIELD

Embodiments of the present invention relate in general to communication networks and ensuring operation of such networks in case of an abnormal traffic condition.

BACKGROUND

Sometimes a communication network may experience an abnormal traffic condition, wherein the amount of traffic sent to, or going through, the communication network suddenly increases significantly. The abnormal traffic condition may be caused, for example, by a Denial of Service, DoS, attack. In case of a DoS attack a malicious actor may try to make the communication network or a certain resource unavailable for its intended users by flooding the communication network or the resource with excessive traffic or requests, which may lead to an overload situation and prevent legitimate traffic. This may happen in relation to one or more network nodes causing additional and unexpected increase of traffic.

Moreover, the abnormal traffic condition may happen even without the presence of a malicious actor. Such a situation may be referred to as unintentional DoS. Even though unintentional DoS is not a deliberate attack, it may anyway make a communication network or a certain resource unavailable for its users, e.g., due to a spontaneous peak in traffic. Regardless of whether the situation is caused by a malicious actor or unintentional DoS, the operation of the communication network should be ensured in any case.

SUMMARY OF THE INVENTION

According to some aspects, there is provided the subject-matter of the independent claims. Some embodiments are defined in the dependent claims.

According to a first aspect of the present invention, there is provided an apparatus comprising means for determining an abnormal traffic condition, means for buffering a time synchronization packet for a first period of time upon determining the abnormal traffic condition and means for transmitting the time synchronization packet to a second network node upon expiry of the first period of time.

According to a second aspect of the present invention, there is provided a method comprising determining, by a first network node, an abnormal traffic condition, buffering a time synchronization packet for a first period of time upon determining the abnormal traffic condition and transmitting the time synchronization packet to a second network node upon expiry of the first period of time.

According to a third aspect of the present invention, there is provided a computer program configured to cause a method in accordance with the second aspect of the present invention.

According to a fourth aspect of the present invention, there is provided an apparatus comprising at least one processing core, at least one memory including computer program code, the at least one memory and the computer program code being configured to, with the at least one processing core, cause the apparatus at least to perform, determine an abnormal traffic condition, buffer a time synchronization packet for a first period of time upon determining the abnormal traffic condition and transmit the time synchronization packet to a second network node upon expiry of the first period of time.

According to a fifth aspect of the present invention, there is provided a non-transitory computer readable medium having stored thereon a set of computer readable instructions that, when executed by at least one processor, cause an apparatus to at least to determine an abnormal traffic condition, buffer a time synchronization packet for a first period of time upon determining the abnormal traffic condition and transmit the time synchronization packet to a second network node upon expiry of the first period of time.

BRIEF DESCRIPTION OF THE DRAWINGS

FIGURE 1 illustrates an example system in accordance with at least some embodiments of the present invention;

FIGURE 2 illustrates a timeline of events in accordance with at least some embodiments of the present invention;

FIGURE 3 illustrates signalling in accordance with at least some embodiments of the present invention;

FIGURE 4 illustrates operation of a network node in accordance with at least some embodiments of the present invention;

FIGURE 5 illustrates an apparatus in accordance with at least some embodiments of the present invention; and

FIGURE 6 is a flow graph of a method in accordance with at least some embodiments of the present invention.

EMBODIMENTS

Embodiments of the present invention relate to ensuring the operation of a communication network when the traffic in the network increases suddenly, e.g., due to a Denial-of-Service, DoS, attack or unintentional DoS. More specifically, the operation of a communication network may be ensured by guaranteeing high precision time synchronization. According to some embodiments of the present invention this may be done by buffering a time synchronization packet for a period of time upon determining, or detecting, that there is an abnormal traffic condition in the communication network and transmitting the time synchronization packet after the time period expires. Compared to a solution where circuit-switched technology or satellite-based time synchronization is used, the present invention may be applied in communication networks which use packet-switched technology for time synchronization.

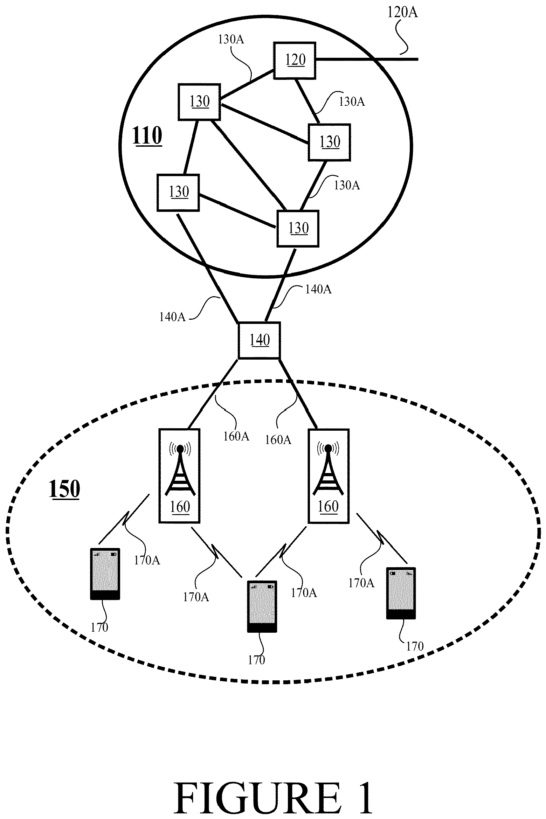

FIGURE 1 illustrates an example system in accordance with at least some embodiments of the present invention. While this example relates to a cellular network, the invention is not restricted thereto and may be employed in any suitable alternative network architecture as well. The exemplary system comprises a core network 110 and a radio-access network 150. In general, a core network may be seen as a time synchronization zone, wherein clocks of network nodes are synchronized to a same time reference. Alternatively, a combination of a core network with a radio-access network may be seen as a time synchronization zone.

Core network 110 may comprise edge node 120, which is tasked with communicating with other networks, such as another core network (not shown). Edge node 120 may communicate with other networks over interface 120A. Core network 110 may also comprise one or more routers, or switches, 130. Routers 130 may forward packets between various network nodes, such as edge node 120 and other routers 130, via interfaces 130A.

Radio Access Network, RAN, controller 140 may be configured to manage the operation of radio access network 150. Depending on the technology used, RAN controller 140 may be known as a base station controller, radio network controller or cloud RAN node, for example. In some technologies, RAN controller 140 may be absent, with radio access network 150 being directly interfaced with core network 110. Moreover, in some technologies, RAN controller 140 may be classified as being comprised in radio access network 150. Core network 110 is interfaced with RAN controller 140 via interface 140A. Radio access network 150 is interfaced with RAN controller 140 via interface 160A.

Radio access network 150 may comprise base stations or access points 160 of a single communication technology, or base stations and/or access points 160 of a mix of communication technologies. In some technologies, the expression "access point" may be used, but in the present disclosure the expression "base station" will be used throughout to streamline terminology. Base stations 160 are interfaced with radio access network controller, or directly to core network 110, via interfaces 160A.

Terminals 170, which may comprise user equipments, cellular telephones, smartphones, tablet computers, laptop computers, connected IoT devices, machine-to-machine devices, connected cars or other suitable terminal devices, may be configured to communicate with base stations 160, comprised in radio access network 150. This communication may take place, in FIGURE 1, over wireless links 170A. Wireless links 170A may comprise an uplink for conveying information from terminal 170 to base station 160, and a downlink for conveying information from base station 160 to terminal 170.

The base station 160, terminal 170 and wireless link 170A may be arranged to operate in accordance with a wireless communication standard, such as, for example, with fifth generation, 5G, also known as New Radio, NR, with Long Term Evolution, LTE, or with Universal Mobile Telecommunications System, UMTS, or Global System for Mobile communications, GSM. A further option is Worldwide Interoperability for Microwave Access, WiMAX, or Wireless Local Area Network, WLAN. Alternatively or in addition to a wireless standard, a wire-line communication standard may be employed, such as Ethernet, for example. In case a wire-line communication standard is employed, communication link 170A is not wireless, but wire-line.

A message from edge node 120, directed to terminal 170, may traverse one or more links of links 120A, 130A, 140A, 160A and 170A. Therefore a message from edge node 120, directed to terminal 170, may traverse through one or more routers 130, RAN controller 140 and base station 160.

Synchronization, including physical layer synchronization and network time synchronization, plays a crucial role in various communication networks. For example, in case of wireless communication networks physical layer synchronization is needed for successful transmissions between two devices and, for example, to preserve connection integrity and facilitate seamless handover. Physical layer synchronization though only enables frequency and phase synchronization, but not time synchronization across a communication network or between networks.

In addition, network-wide time synchronization is required in many communication networks to ensure that different clocks in a communication network are synchronized to a same time reference, i.e., different network nodes comprising clocks have a common understanding of time. Without periodic time synchronization the clocks would start to drift, leading to an unsynchronized state. Certain applications, such as, sensors performing target tracking and connected robots may require precise time synchronization. In addition, for example in cellular communication networks time synchronization may be needed to comply with synchronization requirements of standards. Also, in case of cellular communication networks, e.g., base stations may need to be synchronized in time with neighboring base stations and elements of the core network.

An abnormal traffic condition in a communication network, e.g., due to a DoS attack or unintentional DoS, may affect time synchronization by causing excessive and non-deterministic queuing delays. In addition to causing unforeseen queuing delays, this may also cause changes in routing, i.e., forwarding path changes related to one or several intermediate nodes. Excessive and non-deterministic queuing delays, or forwarding path changes in one direction, may lead to a synchronization offset, if time synchronization is carried over a packet-switched network.

Such an offset may be a critical issue leading to DoS or safety issues, e.g., in cases where air interface fails due to lack of synchronization between base stations or if industry robotics fail to interact as designed due to inconsistent timing between robots. Consequently, the operation of the communication network would be jeopardized. Improvements are therefore needed to ensure operation of communication networks in case of abnormal traffic.

Determining, or detecting, an abnormal traffic condition may be done in various ways. For example, the edge node 120 in FIGURE 1 may monitor incoming traffic and if it the number of received packets within a certain time period is above a threshold, the edge node 120 may determine that there is an abnormal traffic condition. In some embodiments other network nodes, such as routers 130, RAN controller 140, base stations 160 and/or terminals 170, may determine that there is an abnormal traffic condition similarly. Alternatively, the edge node 120 may inform other network nodes, such as routers 130, RAN controller 140, base stations 160 and/or terminals 170, about the situation. Other network nodes may then determine that there is an abnormal traffic condition based on the received information.

As another example, network nodes may determine traffic has increased by a certain percentage within a certain period of time, and determine that there is an abnormal traffic condition based on that. For example, if the traffic suddenly increases significantly, e.g., by 50%, the network nodes may determine that there is an abnormal traffic condition. The abnormal traffic condition may be determined using other means as well. Moreover, in some embodiments the determining an abnormal traffic condition may comprise, e.g., analysing packet rates, bandwidth usage, packet delays and/or packet jitter.

Once it has been determined that there is an abnormal traffic condition, the communication network may take proper actions for resolving the situation. For example, if it is possible to identify packets that are used in the attack by a malicious actor, edge node 120 in FIGURE 1 may be able to simply drop the packets in question. However, in some situations it may not be possible to detect some, or all, of the packets sent by the malicious actor. Moreover, in case of unintentional DoS it would not be reasonable to solve the situation by dropping packets, because the packets are coming from legitimate sources. So in any case there is a need to ensure proper operation of the packet-switched communication network when an abnormal traffic condition is detected.

According to the embodiments of the present invention the operation of a communication network may be ensured by guaranteeing high accuracy time synchronization across the communication network. As an example, traditionally cellular communication networks have used circuit-switched communication technology, wherein two network nodes are connected via a dedicated communication channel. Thus such a solution would solve the problem in question. Alternatively, or in addition, the problem may be solved using Global Positioning System, GPS, which is a satellite-based navigation system and hence does not suffer from attacks made via the packet-switched communication network.

Nevertheless, even though circuit-switched communication technology ensures Quality of Service, QoS, by reserving certain resources for a session, it does not enable flexible resource allocation and connectivity. On the other hand, GPS may not be a cost-effective solution and it also requires connectivity to satellites, which may not feasible always, e.g., for core network nodes that are located underground.

Packet-switched communication technology may be used to enable flexible resource allocation and connectivity. However, many, if not all, high accuracy time synchronization algorithms used in packet-switched networks require transmitting multiple messages. Time offsets between clocks of different network nodes are then calculated for synchronizing the clocks based on time stamps included in those messages. Thus one challenge is that other traffic causing variations in transmission times of time synchronization packets affect the accuracy of time synchronization when it is carried out via a packet-switched network.

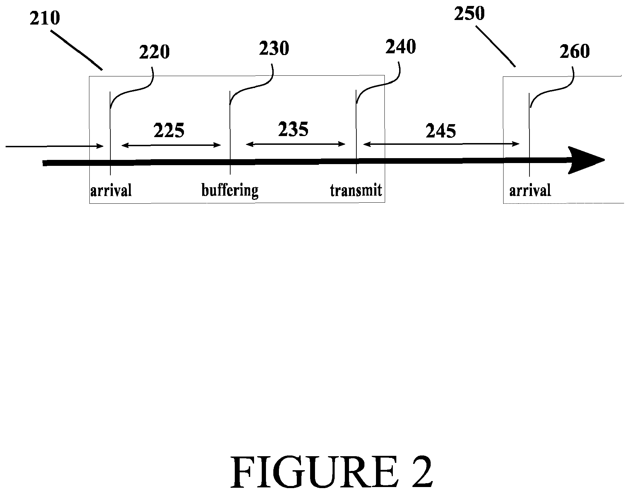

FIGURE 2 illustrates a timeline of events in accordance with at least some embodiments of the present invention. A timeline of events from arrival of a packet at a first network node 210 to arrival of the packet at a second network node 250 is presented. At first, at time 220, the first network node 210 receives the packet, i.e., time instant 220 refers to the arrival time of the packet at the first network node 220. With reference to FIGURE 1, the first network node 220 may be any intermediate node, for example, router 130, radio network controller 150, base station 160 or terminal 170 (e.g., in case of device-to-device communications). In some embodiments, the edge node 120 may be the first network node 220 as well. Similarly, the second network node 250 may be a router 130, radio network controller 150, base station 160 or terminal device 170.

Upon arrival of the packet the first network node 210 may need to look up for the second network node 250 to which transmit the packet, causing a router lookup delay, denoted by 225. After that the packet may be inserted to a buffer, at time 230, to wait for transmission at time instant 240.

The delay between inserting the packet to the buffer and transmission may be referred to as a queuing delay 235. At time instant 240, the packet may be transmitted to a second network node 250 and the packet may arrive at the second network node 250 at time instant 260. The same operation may be repeated at the second network node 250.

After transmitting the packet at time instant 240 there may be transmission and propagation delays 245 before the arrival of the packet at the second network node 250, at time instant 260. Transmission of the packet takes time depending on the length of the packet and the capacity of the communication link between the first and the second network node, which may referred to as transmission delay. In addition, it takes some time for a message to travel from the first network node 210 to the second network node, which may be referred to as propagation delay. The communication path between the first and second network nodes may not be fixed and therefore the time that different messages travel may not be equivalent, which means propagation delays of different packets may vary.

As shown in Figure 2, the total time a packet transfer takes from the moment of arrival of the packet at the first network node 210, i.e., ingress to the first network node 210 to the moment of arrival of the packet at the second network node 250, i.e., ingress to the second network node 250 may comprise multiple parts. In general, router lookup delays 225 may be reasonably consistent and as transmission delays depend on packet size and line speed, those may be deterministic as well, at least in case of wire-line communications.

In addition, in case of wire-line communications propagation delays may only depend on physical line length. Therefore the dominant variable factor may often be the queuing delay, which is affected by other data plane traffic. For example, malicious activity targeting overloading of the network, i.e., DoS attack, may have an impact on the queuing delay and make it non-deterministic.

One challenge in achieving accurate time synchronization is related to non-deterministic delays in different parts of the communication system, because non-deterministic delays may introduce a synchronization offset into the time synchronization result. Time synchronization may be improved in various ways to ensure operation in case of abnormal situations, such as, sudden excessive traffic. For example, high quality (highly frequency-stable) clocks may be used, because those require synchronization rarely. However, this approach would be expensive and in any case synchronization is required every now and then. Also, it may be possible to filter out packets that have traversed the network abnormally slowly, e.g., by selecting only 1% of the fastest packets to decrease jitter, but this solution may lead to rather sparse time synchronization if only one time synchronization packet out of hundred goes through.

In addition, at least in case of Precision Time Protocol, PTP, hardware switches, referred to as transparent clocks, may be used. Such switches avoid variation of delay in internal operation by recording the time that a time synchronization packet has spent in a network node and add the time to a field in the time synchronization packet. The receiving network node may then subtract the value for calculation of the transmission delay. Alternatively, boundary clock may be used in network nodes so that network node acts as a clock slave on master-bound port and clock master on slave-bound ports.

Nevertheless, these solutions require features from the switch which are not commonly available and also incur significant hardware cost to enable accurate timestamping on switch ports. On top of that, these solutions are not designed for ensuring the operation of the network in case of excessive traffic. Instead, the solutions have been designed merely to improve the accuracy of time synchronization.

It may also be possible to prioritize time synchronization packets to reduce jitter by using QoS scheduling. However, even if time synchronization packets would be prioritized, there would be still some variable delay because transmission of another packet may be ongoing. In such case the delay may be in the range of milliseconds, depending on line speed and size of a maximum transmission unit. In addition, this approach would mean that all intermediate nodes need to support QoS scheduling. The approach is also restricted because time synchronization packets cannot be inside a secure tunnel in this case.

At least some embodiments of the present invention ensure the operation of the communication network in case of excessive traffic by providing temporal just-in-time transmission slots for time synchronization packets. Therefore the present invention eliminates queuing delay, which reduces variation of the overall delay in the time synchronization process. As discussed, variation of the delay, i.e., jitter, affects accuracy of time synchronization. Thus the operation of the communication network in case of sudden, excessive traffic can be ensured by minimizing jitter.

Referring to FIGURE 1 again, in the context of time synchronization routers 130 may be seen as intermediate nodes, which perform routing and forwarding of packets in packet-switched networks. Edge node 120 may act as a master source of time or receive a time synchronization packet from another network node, within or outside the communication network, and act as an intermediate network node as well in that case. Also, RAN controller 140, base station 160 and terminal 170 may perform tasks of an intermediate node. The logic of the embodiments may be performed in any network node which forwards time synchronization packets.

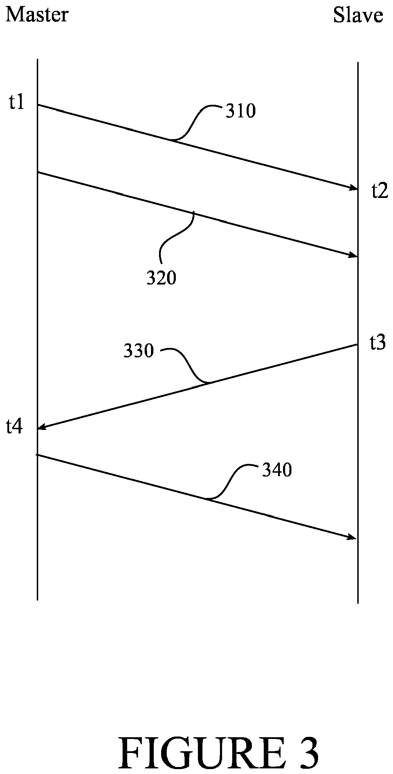

FIGURE 3 illustrates signalling in accordance with at least some embodiments of the present invention. More specifically, the operation of Precision Time Protocol, PTP, is demonstrated. The impact of variable delays on the accuracy of time synchronization may be demonstrated using PTP as an example, even though similar issues may be faced with many other protocols, such as, for example, Network Time Protocol, NTP, and Flooding Time Synchronization Protocol, FTSP.

In PTP, a clock master broadcasts a current time periodically to other clocks, i.e., slave clocks. The master clock starts the operation by taking a time stamp $t1$ at a time of transmission of message 310, which may be referred to as a *Sync* message in the context of PTP. A slave node then takes a time stamp $t2$ upon reception of the message 310. Time stamp $t1$ should be taken as late as possible to represent accurately the time of transmission of message 310. Nevertheless, the master clock may not be able to retrieve accurate time stamp $t1$ from hardware before transmission of message 310. Consequently the master clock may not be able to embed time stamp $t1$ to message 310 and it may have to send a second message 320, comprising the time stamp $t1,$ after message 310. Message 320 may be referred to as a *Follow_Up* message.

For accurate time synchronization the slave clocks may need to determine the transmission time of message 310 individually. For this, each slave clock may transmit message 330 to the master clock. Message 330 may be referred to as a *Delay_Req* message. The slave clocks may take a time stamp $t3$ at the time of transmission of message 330. Upon reception of message 330, the master clock may prepare and transmit message 340, which may be referred to as a *Delay_Resp* message. Message 340 may comprise time stamp $t4,$ which may be taken at the time of reception of message 330 at the master clock. Once the slave clock has received message 340, it has all the time stamps $t1, t2, t3$ and $t4.$

By using the time stamps $t1, t2, t3$ and $t4$ a slave clock may calculate the time offset between the master and the slave clock, for correcting the slave clock accordingly, as follows

$$Offset = \frac{(t_2 - t_1) - (t_4 - t_3)}{2} \qquad (1)$$

Therefore, this kind of time synchronization process produces an incorrect time offset if the transmission delay of message 310, from the master clock to the slave clock, is different compared to the transmission delay of message 330, from the slave clock to the master clock. The synchronization error is half of the difference in transmission delays of these messages. Thus the difference should be minimized to achieve accurate time synchronization. In routed networks the return path may be different than the sending path and therefore also lead to different transmission delays.

But as discussed in relation to FIGURE 2, the dominant variable factor may often be the queuing delay. Especially in case of sudden, excessive traffic the queuing delays, and variations in queuing delays, may become large and increase the synchronization error significantly. This is a non-trivial issue since the delay tolerances may be extremely small, in many cases in the range of few microseconds or even nanoseconds.

Embodiments of the present invention may be used for ensuring that a time synchronization packet does not experience substantial variations in queuing delays in case of excessive traffic. For example, volumetric attack traffic can congest links and thus non-deterministically increase the queueing delays of data plane packets in transit. Volumetric attack may refer to an attack, wherein a very high number of packets and/or large packets are used for overloading packet processing and/or bandwidth capacity of a network node.

Even in normal conditions networks may carry reasonably heavy loads of traffic, and thus at least some time synchronization packets may be adversely impacted by other traffic, even if QoS mechanisms would be used to place the time synchronization packets into the next available transmission slot for a given network node port. Hence the present invention makes it possible to ensure that when a time synchronization packet is to be transmitted, i.e., exit a transmit/egress port in a network node, the transmit/egress port is free. In other words, it is ensured that the transmit/egress port is not sending another packet at that time.

Therefore the present invention may counter a threat actor induced network traffic state, wherein aberrant network traffic would lead to unexpected offset in time synchronization results between clock master and slave. This counter may be activated reactively or alternatively proactively, in which case it would also improve synchronization accuracy against lesser jitter induced by normal traffic.

Embodiments of the present invention provide a set of mechanisms for achieving a deterministic and symmetric forwarding delay for time synchronization packets in network nodes, by making the queuing delay deterministic. Embodiments of the present invention comprise fixed delay/duration temporal buffer with no-queue egress, temporal fast path creation over network control domain, packet entry handling from network edge or clock synch device within network, support from clock devices for the aforementioned mechanism in order to facilitate in-network timing packet origin handling and compensating for different to/from paths between slave and master clocks by introduction of additional compensating delay on a faster path direction.

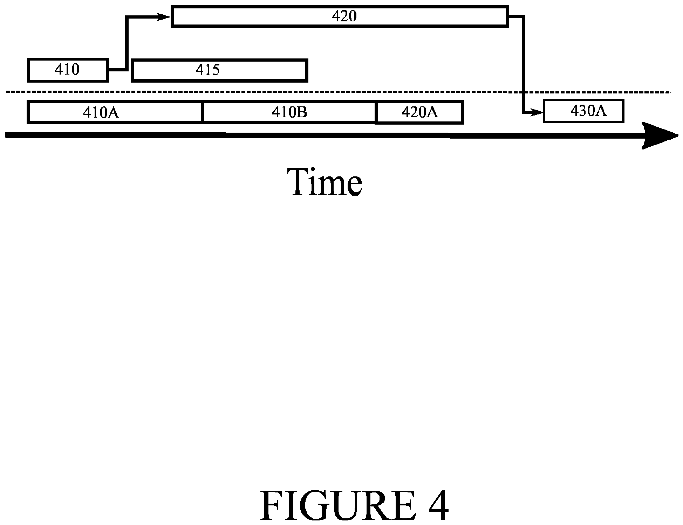

FIGURE 4 illustrates operation of a network node in accordance with at least some embodiments of the present invention. In block 410, the network node receives a time synchronization packet. The time synchronization packet may be received from an ingress port. At the same time the network node may be transmitting a first packet, denoted by block 410A. In other words, an egress port of the network node may be occupied due to sending of the first packet.

Upon reception of the time synchronization packet in block 410, the network node may forward the packet to a buffer 420. The buffer 420 may be a temporal buffer, possibly with a fixed duration. The buffer 420 may be reserved for time synchronization packets exclusively. Also, the network node may start looking up for a next network node to which forward the time synchronization packet after receiving it in block 410. This may cause some delay, which may be referred to as a router lookup delay, denoted by block 415. Also, if the transmission of the first packet 410A has ended, the network node may start transmission of a second packet 410B while the time synchronization packet is in the buffer 420.

The duration of the buffer 420 may be set so that it is longer than the router lookup delay 415. The duration of the buffer 420 may be referred to as a first period of time. In addition, or alternatively, the duration of the buffer 420 may be set so that it is at least as long as a transmission time of a Maximum Transmission Unit, MTU, at a current transmission speed. The transmission time of a MTU may be based on the current transmission speed and size of a MTU. For example, the duration of the buffer 420 may be roughly in the order of 10 microseconds.

The temporal buffer, with the fixed duration, may be implemented using an on-switch, on-router or on-other-networking device, e.g., a bridge, hub or repeater. The temporal buffer may hold a time synchronization packet until a fixed time period has ended, and then release the time synchronization packet for transmission. That is to say, the network node may comprise a switch and be configured so that after sending the current packet, the switch may wait for the expiration of the fixed time period and then transmit the time synchronization packet. Block 430A illustrates transmission of the time synchronization packet upon expiry of the first period of time 420.

The network node may resume normal operation after sending the time synchronization packet. In case of normal operation the buffer 420 may not be used, i.e., time synchronization packets may be transmitted without buffering. In addition, or alternatively, the network node may determine that there is no abnormal traffic condition anymore and then transmit the time synchronization packet without buffering.

Block 420A in FIGURE 4 demonstrates the time that the transmit/egress port is idle. That is to say, the egress port of the network node may be used to transmit one or more packets while the time synchronization packet is in the buffer 420, and the egress port may be set as idle after the transmissions 410A, and possibly 410B, before the first period of time 420 expires. Transmission of 410B may be prevented if it could not be completed before expiry of buffer 420.

The network node may also comprise a counter for the duration of the buffer 420. Hence it may activate the counter for the first period of time upon determining an abnormal traffic condition and transmit the time synchronization packet when the counter expires. After transmission of the time synchronization packet the network node may resume normal port operation, e.g., by deactivating the counter.

The present invention may implemented, for example, using emerging technologies which enable programmable data plane behaviours on hardware, such as, P4 (https://www.cs.cornell.edu/~jnfoster/papers/p4fpga.pdf). In a more software-based environment sufficient temporal accuracy may be achieved by dedicating a Central Processing Unit, CPU, core to counting the temporal delay buffer duration. As an example, a multi-GHz CPU may be able to provide better than microsecond-level accuracy provided the rest of the networking stack is able to avoid scheduling or buffering delays.

Alternatively, or in addition, to the aforementioned fixed temporal buffer, a network node at an edge of a network may comprise traffic engineering capabilities. Referring to FIGURE 1, the network node may be edge node 120. Such capabilities may provide clear temporal paths through the network, even if the network nodes within the network would not differentiate, i.e., treat differently, time synchronization and other packets. This may be referred to as temporal conditioning and the capabilities may be, in some embodiments, provided via Software Defined Networking, SDN, technology.

For example, a network node at an edge of a network may buffer an incoming time synchronization packet and then inform an orchestrator network node, such as, for example, SDN controller in the network, of the incoming time synchronization packet. Consequently, the orchestrator network node may clear out a path across the network for transmission of the time synchronization packet. Such an approach may involve an inline minimal temporal buffering device at the network edge with a much longer fixed delay, possibly in the order of 100s of milliseconds. This delay may be referred to as a second period of time and it may be longer than the first period of time, i.e., the duration of buffer 420 in FIGURE 4. Hence the network node may buffer the time synchronization packet for the longer delay and after that, transmit the time synchronization packet via the path which has been cleared.

The orchestrator network node may drop other packets on relevant egress interfaces of other network nodes upon receiving information about the incoming time synchronization packet, to clear out the path for the incoming time synchronization packet. Thus the orchestrator network node may ensure the time synchronization packet goes through the network unhindered. Alternatively, the orchestrator network node may perform intelligent traffic control, e.g., by buffering other packets while the synchronization packet goes through the network. The orchestrator network node may have full knowledge of a forwarding graph of the network and reasonably accurate knowledge of physical properties of the network for performing these tasks.

In some embodiments, the orchestrator network node may estimate delay properties of the network by using packet probing and probabilistic techniques, such as, for example, a Markov chain. It may be challenging to achieve precise timing with this kind of path clearing and thus longer egress port idle times, shown as block 420A in FIGURE 4, may be needed to provide some error margin. This may increase implementation overhead from very minor to mediocre.

Moreover, in some embodiments it may be necessary to implement additional filtering for time synchronization packets coming from external sources to protect reliability of forwarding within the network. For example, if the above is implemented naively, it may potentially lead to a DoS risk, if an attacker sends a large number of time synchronization packets. This may happen to any QoS mechanism, which prioritizes time synchronization packets, and hence may be avoided using additional filtering for time synchronization packets.

It is also observed that link asymmetry may not be caused only by time synchronization packets arriving from an edge of a network. In symmetrical fashion the problem may also be cause by packets travelling outwards from a clock slave, or client, inside the network. Such an issue may be handled in two ways. If the origin of a time synchronization packet is at an arbitrary location inside the network, temporal buffering may be used to solve the problem. However, if temporal buffering is not used, the origin of the time synchronization may provide the "temporal conditioning" -functionality on its own. Alternatively, or in addition, a first network node on an outbound of a forwarding graph may be provide the "temporal conditioning" -functionality.

One challenge for packet-based time synchronization may be related to different forwarding paths, and implicitly linked different delays, in different directions between slave and master clocks. Thus, in some embodiments according to the present invention, time synchronization accuracy may be secured by increasing the delay on a faster path direction so that the paths are symmetrically delayed in both directions. Such compensation may be possible within a single control domain with visibility and control over the forwarding paths within the domain, as is usually the case in, e.g., SDN architecture. For this a network node may detect a first delay on a first path and a second delay on a second path, and compare the first delay to the second delay. If the first delay is longer than the second delay, based on the comparison, the network node may delay transmission of at least one time synchronization packet on the first path direction so that it matches to the second delay.

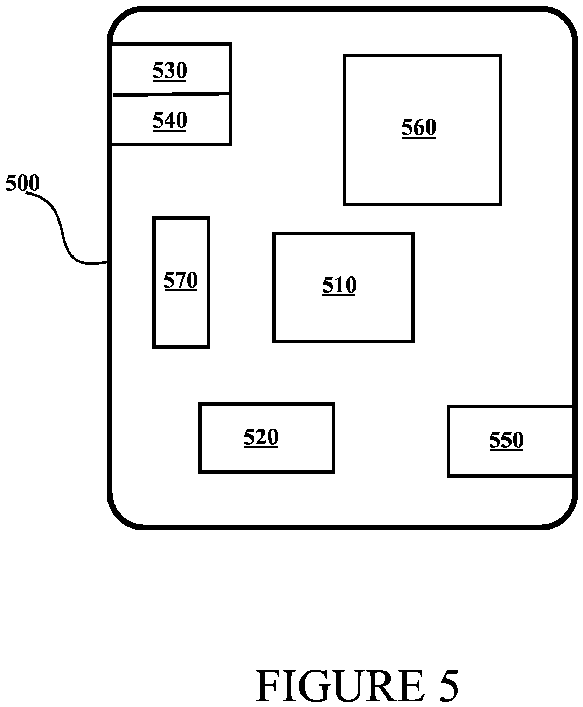

FIGURE 5 illustrates an apparatus in accordance with at least some embodiments of the present invention. Illustrated is device 500, which may comprise, for example, edge node 120, router 130, RAN controller 140, base station 160 or terminal 170 of FIGURE 1. Comprised in device 500 is processor 510, which may comprise, for example, a single- or multi-core processor wherein a single-core processor comprises one processing core and a multi-core processor comprises more than one processing core. Processor 510 may comprise, in general, a control device. Processor 510 may comprise more than one processor. Processor 510 may be a control device. A processing core may comprise, for example, a Cortex-A8 processing core manufactured by ARM Holdings or a Steamroller processing core produced by Advanced Micro Devices Corporation. Processor 510 may comprise at least one Qualcomm Snapdragon and/or Intel Atom processor. Processor 510 may comprise at least one application-specific integrated circuit, ASIC. Processor 510 may comprise at least one field-programmable gate array, FPGA. Processor 510 may be means for performing method steps in device 500. Processor 510 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 500 may comprise memory 520. Memory 520 may comprise random-access memory and/or permanent memory. Memory 520 may comprise at least one RAM chip. Memory 520 may comprise solid-state, magnetic, optical and/or holographic memory, for example. Memory 520 may be at least in part accessible to processor 510. Memory 520 may be at least in part comprised in processor 510. Memory 520 may be means for storing information. Memory 520 may comprise computer instructions that processor 510 is configured to execute. When computer instructions configured to cause processor 510 to perform certain actions are stored in memory 520, and device 500 overall is configured to run under the direction of processor 510 using computer instructions from memory 520, processor 510 and/or its at least one processing core may be considered to be configured to perform said certain actions. Memory 520 may be at least in part comprised in processor 510. Memory 520 may be at least in part external to device 500 but accessible to device 500.

Device 500 may comprise a transmitter 530. Device 500 may comprise a receiver 540. Transmitter 530 and receiver 540 may be configured to transmit and receive, respectively, information in accordance with at least one cellular or non-cellular standard. Transmitter 530 may comprise more than one transmitter. Receiver 540 may comprise more than one receiver. Transmitter 530 and/or receiver 540 may be configured to operate in accordance with GSM, , 5G/NR, LTE, IS-95, WLAN, WiMAX and/or Ethernet standards, for example.

Device 500 may comprise a Near-Field Communication, NFC, transceiver 550. NFC transceiver 550 may support at least one NFC technology, such as NFC, Bluetooth, Wibree or similar technologies.

Device 500 may comprise user interface, UI, 560. UI 560 may comprise at least one of a display, a keyboard, a touchscreen, a vibrator arranged to signal to a user by causing device 500 to vibrate, a speaker and a microphone. A user may be able to operate device 500 via UI 560, for example to configure access control mechanisms.

Device 500 may comprise or be arranged to accept a user identity module 570. User identity module 570 may comprise, for example, a Subscriber Identity Module, SIM, card installable in device 500. A user identity module 570 may comprise information identifying a subscription of a user of device 500. A user identity module 570 may comprise cryptographic information usable to verify the identity of a user of device 500 and/or to facilitate encryption of communicated information and billing of the user of device 500 for communication effected via device 500.

Processor 510 may be furnished with a transmitter arranged to output information from processor 510, via electrical leads internal to device 500, to other devices comprised in device 500. Such a transmitter may comprise a serial bus transmitter arranged to, for example, output information via at least one electrical lead to memory 520 for storage therein. Alternatively to a serial bus, the transmitter may comprise a parallel bus transmitter. Likewise processor 510 may comprise a receiver arranged to receive information in processor 510, via electrical leads internal to device 500, from other devices comprised in device 500. Such a receiver may comprise a serial bus receiver arranged to, for example, receive information via at least one electrical lead from receiver 540 for processing in processor 510. Alternatively to a serial bus, the receiver may comprise a parallel bus receiver.

Device 500 may comprise further devices not illustrated in FIGURE 5. For example, where device 500 comprises a smartphone, it may comprise at least one digital camera. Some devices 500 may comprise a back-facing camera and a front-facing camera, wherein the back-facing camera may be intended for digital photography and the front-facing camera for video telephony. Device 500 may comprise a fingerprint sensor arranged to authenticate, at least in part, a user of device 500. In some embodiments, device 500 lacks at least one device described above. For example, some devices 500 may lack a NFC transceiver 550 and/or user identity module 570.

Processor 510, memory 520, transmitter 530, receiver 540, NFC transceiver 550, UI 560 and/or user identity module 570 may be interconnected by electrical leads internal to device 500 in a multitude of different ways. For example, each of the aforementioned devices may be separately connected to a master bus internal to device 500, to allow for the devices to exchange information. However, as the skilled person will appreciate, this is only one example and depending on the embodiment various ways of interconnecting at least two of the aforementioned devices may be selected without departing from the scope of the present invention.

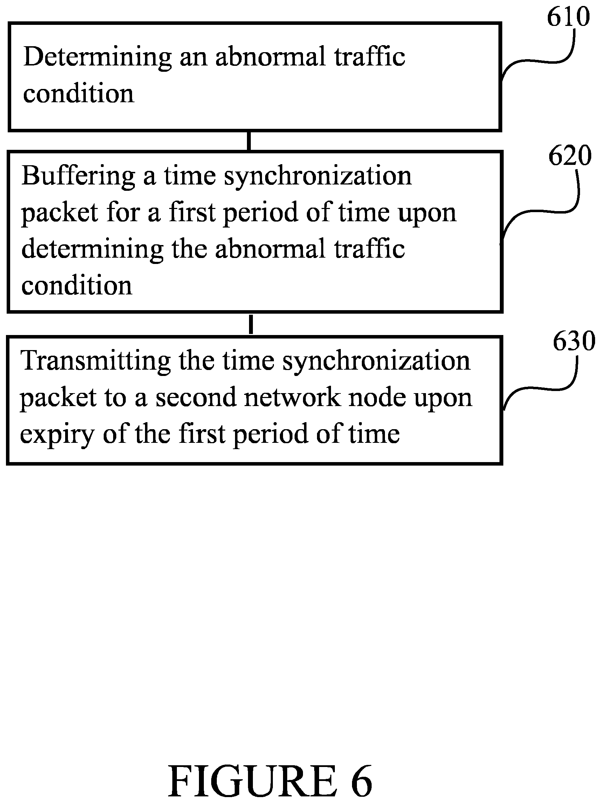

FIGURE 6 is a flow graph of a method in accordance with at least some embodiments of the present invention. The phases of the illustrated method may be performed in by a first network node, such as, for example, edge node 120, router 130, RAN controller 140, base station 160 or terminal 170 of FIGURE 1, or in a control device configured to control the functioning of any of these network nodes, when installed therein. In some embodiments the method may be performed by the apparatus of FIGURE 5.

The method may comprise, at phase 610, determining an abnormal traffic condition. Moreover, the method may comprise, at phase 620, buffering a time synchronization packet for a first period of time upon determining the abnormal traffic condition. The method may also comprise transmitting the time synchronization packet to a second network node upon expiry of the first period of time. With reference to FIGURE 4, the first period may refer to the duration of the buffer 420. With reference to FIGURE 3, the time synchronization packet may refer to any of message 310, 320, 330 and 340.

In some embodiments, the first period of time may be longer than a sending time of a maximum transmission unit. Moreover, in some embodiments the sending time of a maximum transmission unit may be based at least on a speed of communication between the first network node and the second network node and a size of a maximum transmission unit. With reference to FIGURE 2, the first network node may refer to the first network node 210 and the second network node may refer to the second network node 250.

Furthermore, the method may also comprise transmitting at least one data packet via an egress port of the first network node during the first period of time and setting the egress port of the first network node as idle after the transmission of the at least one data packet, before expiry of the first period of time. With reference to FIGURE 4, transmitting via the egress port may refer to at least one of blocks 410A and 410B, and the egress port being idle before expiry of the first period of time may refer to block 420A.

In an embodiment, the method may also comprise activating a counter for the first period of time upon determining the abnormal traffic condition and transmitting the time synchronization packet when the counter expires. Alternatively, or in addition, the method may comprise determining that there is no abnormal traffic condition and transmitting the time synchronization packet without buffering upon determining that there is no abnormal traffic condition. In some embodiments, the method may comprise transmitting at least one data packet during the first period of time.

In an embodiment, the method may comprise transmitting a message to an orchestrator element to request clearing out a path for the time synchronization packet, buffering the time synchronization packet for a second period of time, wherein the second period of time is longer than the first period of time and transmitting the time synchronization packet via the path upon expiry of the second period of time.

In some embodiments, the method may comprise determining a first delay on a first path direction, determining a second delay on a second path direction, comparing the first delay to the second delay and when the first delay is longer than the second delay, delaying transmissions of time synchronization packets on the first path direction to match the second delay.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

In an exemplary embodiment, an apparatus, such as a user equipment or base station, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as a user equipment or base station, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in communication networks, wherein time synchronization is carried out using packet-switched technology. For example, at least some embodiments of the present invention find industrial application in cellular networks employing a packet-switched core network.

ACRONYMS LIST

| | |
|---|---|
| CPU | Central Processing Unit |
| GPS | Global Positioning System |
| GSM | Global System for Mobile Communications |
| DoS | Denial of Service |
| FTSP | Flooding Time Synchronization Protocol |
| LTE | Long Term Evolution |
| MTU | Maximum Transmission Unit |
| NTP | Network Time Protocol |
| NR | New Radio |
| PTP | Precision Time Protocol |
| QoS | Quality of Service |
| RAN | Radio access network |
| SDN | Software Defined Networking |
| UMTS | Universal Mobile Telecommunication System |
| WiMAX | Worldwide Interoperability for Microwave Access |
| WLAN | Wireless Local Area Network |

REFERENCE SIGNS LIST

| 110 | Core network |
|---|---|
| 120 | Edge node |
| 120A, 130A, 140A, 160A | Interfaces |
| 130 | Router or switch |
| 140 | Radio access network controller |
| 150 | Radio-access network |

(continued)

| | |
|---|---|
| 160 | Base station |
| 170 | Terminal |
| 170A | Wireless or wire-line link |
| 210 | First network node in FIGURE 2 |
| 220 | Arrival time of a packet at the first network node |
| 225, 415 | Router lookup delay |
| 230 | Time instant for buffering |
| 235 | Queuing delay |
| 240 | Transmit time of the packet to a second network node |
| 245 | Transmission + propagation delay |
| 250 | Second network node in FIGURE 2 |
| 260 | Arrival of the packet at the second network node |
| 310 | *Sync* message |
| 320 | *Follow_Up* message |
| 330 | *Delay_Req* message |
| 340 | *Delay_Resp* message |
| 410 | Receiving a time synchronization packet |
| 410A | Transmitting a data packet |
| 420 | Duration of a buffer |
| 420A | Egress port idle |
| 430A | Transmission of the time synchronization packet |
| 500-570 | Structure of the apparatus of FIGURE 5 |
| 610-630 | Phases of the method of FIGURE 6 |

**Claims**

1. An apparatus, comprising,

   means for determining an abnormal traffic condition;
   means for buffering a time synchronization packet for a first period of time upon determining the abnormal traffic condition; and
   means for transmitting the time synchronization packet to a second network node upon expiry of the first period of time.

2. An apparatus according to claim 1, wherein the first period of time is longer than a sending time of a maximum transmission unit.

3. An apparatus according to claim 2, wherein the sending time of a maximum transmission unit is based at least on a speed of communication between the apparatus and the second network node and a size of a maximum transmission unit.

4. An apparatus according to any of the preceding claims, further comprising,

   means for transmitting at least one data packet via an egress port of the apparatus during the first period of time; and

means for setting the egress port of the apparatus as idle after the transmission of the at least one data packet, before expiry of the first period of time.

5. An apparatus according to any of the preceding claims, further comprising

   means for activating a counter for the first period of time upon determining the abnormal traffic condition; and
   means for transmitting the time synchronization packet when the counter expires.

6. An apparatus according to any of the preceding claims, further comprising

   means for determining that there is no abnormal traffic condition; and
   means for transmitting the time synchronization packet without buffering upon determining that there is no abnormal traffic condition.

7. An apparatus according to any of the preceding claims, further comprising
   means for transmitting at least one data packet during the first period of time.

8. An apparatus according to any of the preceding claims, further comprising

   means for transmitting a message to an orchestrator element to request clearing out a path for the time synchronization packet;
   means for buffering the time synchronization packet for a second period of time, wherein the second period of time is longer than the first period of time; and
   means for transmitting the time synchronization packet via the path upon expiry of the second period of time.

9. An apparatus according to any of the preceding claims, further comprising

   means for determining a first delay on a first path direction;
   means for determining a second delay on a second path direction;
   means for comparing the first delay to the second delay; and
   when the first delay is longer than the second delay, delaying transmissions of time synchronization packets on the first path direction to match the second delay.

10. A method, comprising,

    determining, by a first network node, an abnormal traffic condition;
    buffering a time synchronization packet for a first period of time upon determining the abnormal traffic condition; and
    transmitting the time synchronization packet to a second network node upon expiry of the first period of time.

11. A method according to claim 10, wherein the first period of time is longer than a sending time of a maximum transmission unit.

12. A method according to claim 10 or claim 11, further comprising

    transmitting at least one data packet via an egress port of the first network node during the first period of time; and
    setting the egress port of the first network node as idle after the transmission of the at least one data packet and before the expiry of the first period of time.

13. A method according to any of claims 10 - 12, further comprising activating a counter for the first period of time upon determining the abnormal traffic condition and transmitting the time synchronization packet when the counter expires.

14. A method according to any of claims 10 - 13, further comprising

    determining that there is no abnormal traffic condition; and
    transmitting the time synchronization packet without buffering upon determining that there is no abnormal traffic condition.

**15.** A computer program configured to cause a method in accordance with at least one of claims 10 - 14 to be performed.

**16.** An apparatus comprising at least one processing core, at least one memory including computer program code, the at least one memory and the computer program code being configured to, with the at least one processing core, cause the apparatus at least to perform:

determine an abnormal traffic condition;
buffer a time synchronization packet for a first period of time upon determining the abnormal traffic condition; and
transmit the time synchronization packet to a second network node upon expiry of the first period of time.

**17.** An apparatus according to claim 16, wherein the first period of time is longer than a sending time of a maximum transmission unit.

**18.** An apparatus according to claim 17, wherein the sending time of a maximum transmission unit is based at least on a speed of communication between the apparatus and the second network node and a size of a maximum transmission unit.

**19.** An apparatus according to any of claims 16 - 18, wherein the at least one processing core, the at least one memory including computer program code, are configured to, with the at least one processing core, cause the apparatus at least to further perform,

transmit at least one data packet via an egress port of the apparatus during the first period of time; and
set the egress port of the apparatus as idle after the transmission of the at least one data packet, before expiry of the first period of time.

**20.** An apparatus according to any of claims 16 - 19, wherein the at least one processing core, the at least one memory including computer program code, are configured to, with the at least one processing core, cause the apparatus at least to further perform,

activate a counter for the first period of time upon determining the abnormal traffic condition; and
transmit the time synchronization packet when the counter expires.

**21.** An apparatus according to any of claims 16 - 20, wherein the at least one processing core, the at least one memory including computer program code, are configured to, with the at least one processing core, cause the apparatus at least to further perform,

determine that there is no abnormal traffic condition; and
transmit the time synchronization packet without buffering upon determining that there is no abnormal traffic condition.

**22.** An apparatus according to any of claims 16 - 21, wherein the at least one processing core, the at least one memory including computer program code, are configured to, with the at least one processing core, cause the apparatus at least to further perform,
transmit at least one data packet during the first period of time.

**23.** An apparatus according to any of claims 16 - 22, wherein the at least one processing core, the at least one memory including computer program code, are configured to, with the at least one processing core, cause the apparatus at least to further perform,

transmit a message to an orchestrator element to request clearing out a path for the time synchronization packet;
buffer the time synchronization packet for a second period of time, wherein the second period of time is longer than the first period of time; and
transmit the time synchronization packet via the path upon expiry of the second period of time.

**24.** An apparatus according to any of claims 16 - 23, wherein the at least one processing core, the at least one memory including computer program code, are configured to, with the at least one processing core, cause the apparatus at least to further perform,

determine a first delay on a first path direction;
determine a second delay on a second path direction;
compare the first delay to the second delay; and
when the first delay is longer than the second delay, delay transmissions of time synchronization packets on the first path direction to match the second delay.

25. A non-transitory computer readable medium having stored thereon a set of computer readable instructions that, when executed by at least one processor, cause an apparatus to at least:

determine an abnormal traffic condition;
buffer a time synchronization packet for a first period of time upon determining the abnormal traffic condition; and
transmit the time synchronization packet to a second network node upon expiry of the first period of time.

EP 3 591 929 A1

# FIGURE 1

16

# FIGURE 2

Master                                    Slave

t1 ⟍ 310

t2

320

t3

330

t4

340

# FIGURE 3

Time

FIGURE 4

FIGURE 5

Determining an abnormal traffic condition — 610

Buffering a time synchronization packet for a first period of time upon determining the abnormal traffic condition — 620

Transmitting the time synchronization packet to a second network node upon expiry of the first period of time — 630

# FIGURE 6

Europäisches
Patentamt

European
Patent Office

Office européen
des brevets

# EUROPEAN SEARCH REPORT

Application Number

EP 18 18 2297

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 273 706 A1 (ALCATEL LUCENT [FR]) 12 January 2011 (2011-01-12) * paragraph [0015] - paragraph [0054]; figures 1-6 * | 1-15 | INV. H04L29/06 H04J3/06 |
| A | A. Morton ET AL: "RFC 5481 - Packet Delay Variation Applicability Statement", , 31 March 2009 (2009-03-31), pages 1-40, XP055572069, Retrieved from the Internet: URL:https://tools.ietf.org/html/rfc5481#section-4.2 [retrieved on 2019-03-20] * Section 3.2 * | 1-15 | |
| A | US 2012/008646 A1 (FOURCAND SERGE FRANCOIS [US]) 12 January 2012 (2012-01-12) * paragraph [0005] - paragraph [0044]; figures 1-8 * | 1-15 | |

TECHNICAL FIELDS
SEARCHED (IPC)

H04L
H04J

The present search report has been drawn up for all claims

| Place of search | Date of completion of the search | Examiner |
|---|---|---|
| Munich | 20 March 2019 | Hou, Jie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 591 929 A1**

## ANNEX TO THE EUROPEAN SEARCH REPORT
## ON EUROPEAN PATENT APPLICATION NO.

EP 18 18 2297

20-03-2019

| Patent document cited in search report | | Publication date | Patent family member(s) | | Publication date |
|---|---|---|---|---|---|
| EP 2273706 | A1 | 12-01-2011 | NONE | | |
| US 2012008646 | A1 | 12-01-2012 | CA | 2760621 A1 | 07-01-2012 |
| | | | CN | 102484548 A | 30-05-2012 |
| | | | EP | 2586142 A1 | 01-05-2013 |
| | | | JP | 5395957 B2 | 22-01-2014 |
| | | | JP | 2012533266 A | 20-12-2012 |
| | | | US | 2012008646 A1 | 12-01-2012 |
| | | | WO | 2012006311 A1 | 12-01-2012 |

EPO FORM P0459